# EUROPÄISCHE PATENTSCHRIFT

(11) **EP 3 526 015 B1**
(45) Veröffentlichungstag und Bekanntmachung des Hinweises auf die Patenterteilung: **21.06.2023**
(21) Anmeldenummer: 17791305.0
(22) Anmeldetag: 12.10.2017
(51) Int. Cl.: B29D 11/00, B29C 45/26, B29C 33/30

(54) **ABFORMWERKZEUG**
MOLDING TOOL
MOULE

(30) Priorität: 14.10.2016 DE 102016119636
(43) Veröffentlichungstag der Anmeldung: 21.08.2019
(73) Patentinhaber: tooz technologies GmbH, 73430 Aalen (DE)
(72) Erfinder: AUTSCHBACH, Lutz, 73447 Oberkochen (DE); BARTEL, Kai, 73560 Böbingen (DE)
(74) Vertreter: Sticht, Andreas
(86) Internationale Anmeldenummer: PCT/EP2017/076023
(87) Internationale Veröffentlichungsnummer: WO 2018/069428

(56) Entgegenhaltungen:
- WO-A1-2007/126316
- DE-C- 904 345
- US-A- 5 249 947
- US-A- 5 288 221
- US-A- 6 120 279
- US-A1- 2004 217 495
- US-A1- 2014 199 924

## Beschreibung

Die vorliegende Anmeldung betrifft ein Abformwerkzeug für den Kunststoffspritzguss oder das Kunststoffspritzprägen, insbesondere von optischen Kunststoffelementen wie beispielsweise Linsen. Derartige optische Kunststoffelemente können beispielsweise zur Herstellung von Datenbrillen verwendet werden.

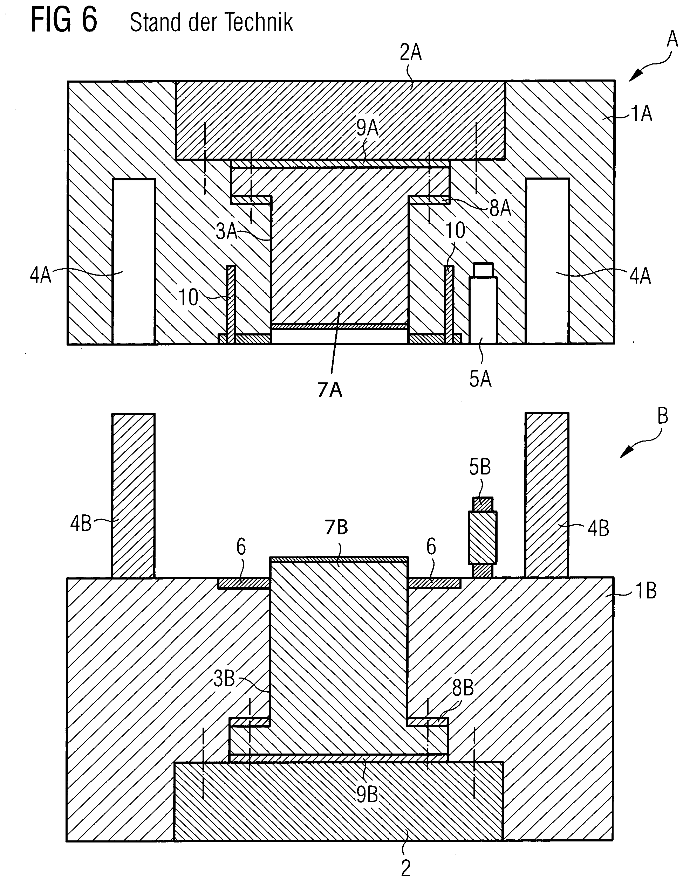

Ein herkömmliches Abformwerkzeug ist in Fig. 6 dargestellt. Das in Fig. 6 dargestellte Abformwerkzeug umfasst zwei Hälften, wobei eine erste Hälfte mit A und eine zweite Hälfte mit B bezeichnet sind. Bezugszeichen mit "A" am Ende (zum Beispiel 1A, 2A etc.) beziehen sich auf die erste Hälfte A, und Bezugszeichen mit "B" am Ende (zum Beispiel 1B, 2B etc.) beziehen sich auf die zweite Hälfte B. Wird in der folgenden Erklärung die Endung A oder B weggelassen, bezieht sich diese auf die entsprechenden Elemente beider Hälften A, B. Beispielsweise ist dann mit dem Bezugszeichen 1 sowohl das Bezugszeichen 1A als auch das Bezugszeichen 1B gemeint.

Jede der Hälften umfasst ein Stammwerkzeug 1 (1A bzw. 1B), in welches ein jeweiliger Abformkern 3 eingesetzt ist. Jeder Abformkern 3 weist eine jeweilige Abformfläche 7 auf. Zur Herstellung eines Kunststoffelements werden die Hälften A, B, wie später noch näher erläutert werden wird, zusammengebracht, und Kunststoff wird zwischen die Abformflächen 7A, 7B eingespritzt, wobei die Form der Abformflächen 7A, 7B dann die Form des herzustellenden Kunststoffelements bestimmt.

Der Abformkern 3 ist über eine Stützplatte 2 in dem Stammwerkzeug 1 mittels Klemmung und Verschraubung fixiert. Zur Montage des Abformkerns 3 wird die Stützplatte 2 herausgenommen (durch Lösen entsprechender nicht dargestellter Schrauben) und der Abformkern wird in das Stammwerkzeug eingesetzt. Durch Abstandsplatten 8, 9 erfolgt eine Höhenjustage des Abformkerns. Die Abstandsplatten 8, 9 sind dabei einfache plattenförmige Elemente, welche in verschiedenen Dicken zur Verfügung stehen, um somit eine Höhenjustage bewirken zu können. Nach Justage wird dann der Abformkern gegebenenfalls mit dem Stammwerkzeug verschraubt bevor die Stützplatte 2 wieder eingesetzt wird und ebenfalls mit dem Stammwerkzeug 1 verschraubt wird.

Das Stammwerkzeug 1 weist zudem Dichtplatten 6 auf, welche beim Zusammenfügen der Hälften A, B einen Raum, in welchem das herzustellende Element geformt wird (zwischen den Abformflächen 7) abdichten. Zudem können die Elemente 6 als Messreferenz dienen. Die Elemente 6 können dabei als Messreferenz ausgelegt sein, indem sie definierte Geometriemerkmale aufweisen, z.B. definierte Planflächen, Zylinder, Kreislöcher, Kegel etc., die über geeignete taktile oder optische Messtechnik in Lage- und Orientierung eingemessen werden können.

Für die Herstellung des jeweiligen Kunststoffelements, auch als Abformung bezeichnet, werden die Hälften A, B, d.h. die Stammwerkzeuge 1A, 1B mit den darin eingesetzten Abformkernen 3A, 3B zusammengefahren, wobei zur Führung Führungssäulen 4B des Stammwerkzeugs 1B in entsprechende Führungslöcher 4A des Stammwerkzeugs 1A eingreifen und somit eine Führung ermöglichen. Zu bemerken ist, dass ebenso Führungssäulen an dem Stammwerkzeug 1A und entsprechende Führungslöcher an dem Stammwerkzeug 1B angebracht sein können. Eine Feinjustage, welche vor dem Abformprozess einjustiert wird, kann über eine Präzisionsführung 5 mit Kugelkäfig (d.h. Kugellagerführung) erfolgen. Zur Herstellung des entsprechenden Kunststoffelements werden die Hälften A, B zusammengebracht, und ein entsprechender Kunststoff wird in einen Raum zwischen den Abformflächen 7A, 7B eingespritzt, gehalten sowie gegebenenfalls nachgeprägt (im Falle des Kunststoffspritzprägens).

Beim Kunststoffspritzguss wird Kunststoffgranulat erhitzt, damit verflüssigt und mittels einer Zuführung zwischen zwei zusammengefahrene Formhälften eingespritzt.

Beim Kunststoffspritzprägen wird im Prinzip wie beim Spritzguss vorgegangen, nur sind die Abformflächen 7 der Abformkerne 3 noch nicht vollständig oder in Teilen nicht komplett zusammengefahren. Nach dem Einspritzen des Kunststoffs wird dann über das restliche Zusammenfahren ein Prägehub/Druck ausgeübt, um z.B. schwer zu füllende Bereiche vollständig füllen zu können, den Werkstoff zu homogenisieren, Restluft aus dem System zu drücken etc.

Nachdem der Kunststoff hinreichend abgekühlt ist und sich verfestigt hat, werden die Hälften A, B wieder getrennt, und das hergestellte Werkstück wird mittels Auswerfern 10 gelöst, welche aus dem Stammwerkzeug 1A herausfahren, um das Werkstück von dem Abformkern 3A zu lösen. Entsprechende Auswerfer können zusätzlich oder alternative auch in dem Stammwerkzeug 1B angeordnet sein.

Zu bemerken ist, dass die Fig. 6 eine lediglich schematische Darstellung eines herkömmlichen Abformwerkzeugs zeigt, und einige Details, welche in herkömmlichen Abformwerkzeugen vorhanden sind, nicht explizit dargestellt sind, wie beispielsweise Anguss, Heiß-/Kaltkanäle, Sensorik, Hydraulik, Be-/Entlüftung, Prägefunktionen (für das Kunststoffspritzprägen), Maschinenaufnahme (Schnittstelle zwischen den Stammwerkzeughälften 1A, 1B und einer Abformmaschine, welche das dargestellte Abformwerkzeug benutzt) etc. Der Anguss ist dabei der Teil am spritzgegossenen/geprägten Kunststoffelement, wo der Kunststoff eingeflossen ist und in einem späteren Fertigungsschritt abgetrennt wird. Heiß/Kaltkanäle sind Kanäle im Stammwerkzeug 1, durch die der Kunststoff fließt. Sie können ohne eigene Temperierung oder mit Heiz-/Kühlelementen versehen sein Zudem werden für das Spritzgießen/-prägen Prozessdaten wie Temperatur, Druck, Fließgeschwindigkeiten zur Steuerung/Regelung benötigt. Entsprechende Sensorik am/im Stammwerkzeug 1 oder an/in den Abformkernen 3 liefern diese Daten. Eine Hydraulik kann benötigt werden zum Bewegen von Bauteilelementen, z.B. für das Prägen, für die Auswerfer u.a. Außerdem kann beim Zusammenfahren der Stammwerkzeughälften Luft eingeschlossen werden. Diese kann den Spritzguss/Prägeprozess negativ beeinflussen. Durch eine Be-/Entlüftung kann dieser Bereich mittels Pumpen etc. vakuumgezogen werden. Umgekehrt kann es notwendig sein, beim Öffnen der Stammwerkzeuge 1 etc. Luft definiert zuzuführen, um Unterdrücke zu vermeiden.

Zu bemerken ist, dass in dem Beispiel der Fig. 6 jedes Stammwerkzeug 1 einen Abformkern 3 aufweist, und jeder Abformkern 3 eine Abformfläche 7aufweist. Es können jedoch auch mehrere Abformkerne und/oder mehrere Abformflächen bereitgestellt sein. Die Darstellung und Beschreibung von Abformwerkzeugen mit einem Abformkern und einer Abformfläche schließt also nicht aus, dass mehrere Abformkerne und/oder mehrere Abformflächen vorhanden sind.

Mit einem Abformwerkzeug wie in Fig. 6 dargestellt können viele herkömmliche Kunststoffspritzgussteile gut hergestellt werden. Sind jedoch Toleranzen im Bereich weniger Mikrometer wie für optische Elemente erforderlich, weist das Abformwerkzeug der Fig. 6 verschiedene Nachteile auf.

Beim Einsetzen der Abformkerne 3 in die Stammwerkzeuge liegen üblicherweise Spaltmaße im Bereich einiger Mikrometer vor, so dass eine genaue Justage schwierig sein kann. Die Justage erfolgt dabei unter anderem mittels der Abstandsplatten 8, 9, wobei zur Veränderung der Justage die Platten ausgetauscht werden müssen. Hierzu muss die jeweilige Hälfte A oder B weitgehend zerlegt werden, das heißt die jeweilige Stützplatte 2 muss herausgeschraubt werden, der jeweilige Abformkern muss gelöst werden, bevor die Abstandsplatten 8, 9 ausgetauscht werden können. Beim Zusammenbau können dann neue Montagetoleranzen auftreten, so dass mehrfach nachjustiert werden muss.

Zudem sind die Toleranzen beim Zusammenfahren der Hälften A, B bei herkömmlichen Herangehensweisen relative hoch. Des Weiteren ist eine Winkelkorrektur der Abformkerne 3 einzeln oder zueinander beim Einbau und beim Zusammenfahren der Hälften A, B kaum in definierter Weise möglich. Diese erschwert zumindest die Benutzung derartiger herkömmlicher Abformwerkzeuge zur Herstellung von Werkstücken, bei denen Toleranzen im Mikrometerbereich eingehalten werden müssen, zum Beispiel von Optikelementen.

Aus der US 6 120 279 A ist ein Abformwerkzeug bekannt, welches mindestens ein steuerbares Einstellelement zum Festlegen der Lage eines Abformkerns eines Abformwerkzeugs umfasst. Das steuerbare Einstellelement dieser Druckschrift umfasst dabei im Wesentlichen zwei rohrförmige Elemente, die durch Drehung ein Arretieren oder Freigeben eines Abformkerns ermöglichen.

Weitere Abformwerkzeuge sind aus der WO 2007/126316 A1, der US 5 288 221 A, der US 2004/217495 A1 oder der US 2014/199924 A1 bekannt.

Es ist daher eine Aufgabe, die oben beschriebenen Nachteile ganz oder teilweise abzumildern und Abformwerkzeuge bereitzustellen, welche zumindest besser als die herkömmlichen Abformwerkzeuge zur Herstellung von Werkstücken mit Toleranzen im Mikrometerbereich geeignet sind.

Es wird ein Abformwerkzeug nach Anspruch 1 sowie eine Verwendung nach Anspruch 10 bereitgestellt.

Die Unteransprüche definieren weitere Ausführungsformen.

Erfindungsgemäß wird ein Abformwerkzeug bereitgestellt, umfassend:
ein oder mehrere steuerbare Einstellelemente zum Festlegen der Lage eins Abformkerns des Abformwerkzeugs, wobei das Abformwerkzeug ein Stammwerkzeug mit einer (d.h. mindestens einer) Aufnahme für den Abformkern umfasst, wobei das mindestens eine steuerbare Einstellelement ein oder mehrere in dem Stammwerkzeug angeordnete Einstellelemente umfasst,
wobei die ein oder mehreren in dem Stammwerkzeug angeordneten Einstellelemente eine oder mehrere zwischen einer ersten Position und einer zweiten Position hin und her bewegliche Einstellelemente umfassen, wobei die beweglichen Einstellelemente in der ersten Position in die Aufnahme ragen, um mit Vertiefungen in dem Abformkern in Eingriff zu gelangen, und in der zweiten Position zurückgezogen sind, um den Abformkern freizugeben, wobei die beweglichen Einstellelemente umlaufend um den Abformkern angeordnet sind und/oder an verschiedenen Positionen in vertikaler Richtung angeordnet sind,
wobei die ein oder mehreren in dem Stammwerkzeug angeordneten Einstellelemente derart angeordnet und eingerichtet sind, eine Verkippung des Abformkerns und/oder eine Höhenlage des Abformkerns einzustellen.

Unter einem steuerbaren Einstellelement ist dabei ein Element zu verstehen, bei dem von Steuerung von außen, insbesondere über Steuerleitungen, eine Einstellung vorgenommen werden kann. Die Einstellung kann insbesondere Abmessungen des Einstellelements verändern und/oder einen Druck auf andere Elemente ausüben, um so eine Justage vorzunehmen. Durch Verwendung derartiger steuerbarer Einstellelemente ist es insbesondere möglich, eine Justage ohne Demontage des Abformwerkzeugs vorzunehmen.

Auf diese Weise kann der Abformkern einfach aus dem Stammwerkzeug herausgenommen werden und wieder eingesetzt werden, ohne dass ein Zerlegen des Abformwerkzeugs, beispielsweise ein Lösen einer Stützplatte erforderlich ist.

Das Abformwerkzeug kann den Abformkern umfassen, wobei der Abformkern eine obere Fläche, eine untere Fläche und Seitenflächen aufweist, wobei auf der oberen Fläche eine (d.h. mindestens eine) Abformfläche ausgebildet ist, wobei das mindestens eine steuerbare Einstellelement ein oder mehrere an der Seitenfläche des Abformkerns angeordnete Einstellelemente umfasst.

Auf diese Weise kann der Abformkern im Stammwerkzeug fixiert werden und eine Lage desselben eingestellt werden.

Die in dem Stammwerkzeug angeordneten ein oder mehreren Einstellelemente können ein oder mehrere in einer Seitenfläche der Aufnahme angeordnete Einstellelemente umfassen.

Auf diese Weise kann der Abformkern im Stammwerkzeug fixiert werden und eine Lage desselben eingestellt werden.

Die in dem Stammwerkzeug angeordneten ein oder mehreren Einstellelemente können zusätzlich oder alternativ an einem Boden der Aufnahme angeordnete Einstellelemente und/oder an einer Unterseite einer Einbuchtung der Aufnahme angeordnete Einstellelemente zu einer Höhenlageeinstellung des Abformkerns umfassen. So ist eine solche Höhenlageeinstellung ohne Verwendung von Abstandsplatten möglich.

Das Abformwerkzeug kann weiter den Abformkern umfassen, wobei der Abformkern eine abgerundete Form aufweist, so dass er in der Aufnahme durch Betätigen der ein oder mehreren steuerbaren Einstellelemente verkippbar ist.

Auf diese Weise kann eine Winkeljustage durchgeführt werden.

Das Abformwerkzeug kann weiter ein weiteres Stammwerkzeug umfassen, wobei zum Abformen das Stammwerkzeug und das weitere Stammwerkzeug zusammenfügbar sind, wobei das Stammwerkzeug und das weitere Stammwerkzeug jeweils eine (d.h. mindestens eine) Aufnahme für einen Abformkern aufweisen, wobei die ein oder mehreren steuerbaren Einstellelemente ein Einstellelement zur Justierung einer relativen Lage des Stammwerkzeugs zu dem weiteren Stammwerkzeug in einem zusammengefügten Zustand umfassen.

Das Einstellelement zum Einstellen kann hierzu in einer Führungssäule und/oder in einer Führungsvertiefung angeordnet sein.

Durch die Bereitstellung eines derartigen steuerbaren Einstellelements in einer Führung zum Zusammenfügen von Stammwerkzeughälften kann eine verbesserte Justage von Stammwerkzeughälften zueinander erreicht werden.

Das mindestens eine steuerbare Einstellelement kann ein mechanisches, pneumatisches und/oder hydraulisches Einstellelement umfassen.

Das mindestens eine steuerbare Einstellelement kann insbesondere ein Hydrodehnspannelement umfassen.

Durch die Verwendung von Hydrodehnspannelementen können derartige steuerbare Einstellelemente einfach implementiert werden, und es wird eine gute Einstellmöglichkeit erreicht. Es sind jedoch auch andere Arten von Einstellelementen möglich.

Das obige Abformwerkzeug kann insbesondere zur Herstellung optischer Elemente wie beispielsweise Linsen verwendet werden.

Die Erfindung wird nachfolgend unter Bezugnahme auf Ausführungsbeispiele unter Bezugnahme auf die beigefügten Zeichnungen näher erläutert. Es zeigen:
Fig. 1 eine Hälfte eines Abformwerkzeugs der nicht Teil der Erfindung ist.
Fig. 2 eine Hälfte eines Abformwerkzeugs der ebenfalls nicht Teil der Erfindung ist.
Fig. 3 eine Hälfte eines Abformwerkzeugs gemäß einem weiteren Ausführungsbeispiel,
Fig. 4 eine Hälfte eines Abformwerkzeugs gemäß einem weiteren Ausführungsbeispiel,
Fig. 5 ein Abformwerkzeug gemäß einem weiteren Ausführungsbeispiel, und
Fig. 6 ein herkömmliches Abformwerkzeug.

Im Folgenden werden verschiedene Ausführungsbeispiele detailliert erläutert. Es ist zu bemerken, dass diese Ausführungsbeispiele lediglich zur Veranschaulichung dienen und nicht als einschränken auszulegen sind.

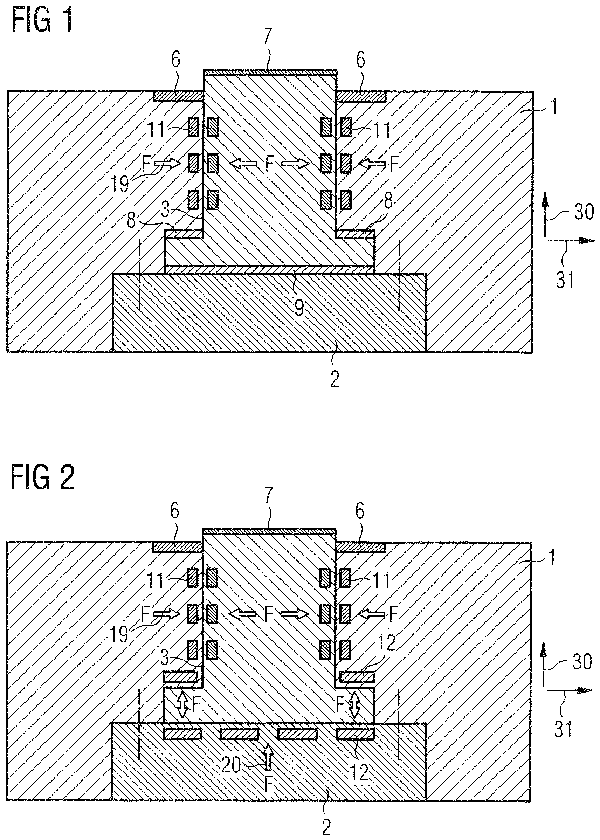

Zum besseren Verständnis werden im Folgenden unter Bezugnahme auf die Figuren 1-5 verschiedene Modifikationen und Erweiterungen des eingangs unter Bezugnahme auf Fig. 6 erläuterten herkömmlichen Abformwerkzeugs erläutert. Diese Modifikationen und Erweiterungen werden in kumulativer Weise dargestellt, d.h. von Figur zu Figur kommen weitere Modifikationen und Erweiterungen hinzu. Es ist jedoch zu bemerken, dass die verschiedenen Modifikationen und Erweiterungen auch unabhängig voneinander implementiert werden können. Beispielsweise kann die in Fig. 2 verglich mit Fig. 1 zusätzlich dargestellte Modifikation und Erweiterung auch unabhängig von den Modifikationen und Erweiterungen der Fig. 1 implementiert werden. Die Figuren 1-5 zeigen dabei Querschnittsansichten von Abformwerkzeugen.

Um Wiederholungen zu vermeiden, tragen gleich oder einander entsprechende Elemente die gleichen Bezugszeichen. Elemente, welche bereits eingangs unter Bezugnahme auf die Fig. 6 erläutert wurden, werden nicht nochmals detailliert erläutert. Zusätzlich zu den explizit dargestellten Komponenten des Abformwerkzeugs können weitere, nicht dargestellte Komponenten bereitgestellt sein, insbesondere in herkömmlichen Abformwerkzeugen verwendete Komponenten. Der unbestimmte Artikel "ein" oder "eine" ist nicht als Zahlenangabe zu verstehen, sondern im Sinne von "ein oder mehrere".

In den Figuren 1-4 ist dabei jeweils eine Hälfte eines Abformwerkzeugs mit einem Stammwerkzeug 1 und einem Abformkern 3 dargestellt. Die jeweils andere Hälfte kann entsprechend ausgestaltet sein. Eine durch einen Pfeil 30 angedeutete Richtung wird im Folgenden als vertikale Richtung und eine durch einen Pfeil 31 angedeutete Richtung wird als horizontale Richtung bezeichnet. Dies dient lediglich der einfachen Bezeichnung und impliziert keine spezielle Lage der dargestellten Abformwerkzeuge bei Benutzung.

Bei dem Ausführungsbeispiel der Fig. 1 sind verglichen mit der herkömmlichen Herangehensweise der Fig. 6 steuerbare Einstellelemente 11 bereitgestellt. Die steuerbaren Einstellelement 11 sind dabei wie in Fig. 1 dargestellt auf einer Innenseite einer Aufnahme (Aussparung) des Stammwerkzeugs 1, wobei in die Aufnahme der Abformkern 3 aufgenommen wird, und/oder an einer Außenseite des Abformkerns 3 bereitgestellt. Die steuerbaren Einstellelement 11 können umlaufend um den Abformkern 3 angeordnet sein, und/oder in verschiedenen Höhen (in dem Beispiel der Fig. 1 in drei Höhen) angeordnet sein. Die steuerbaren Einstellelemente 11 können dabei über den gesamten Umfang des Abformkerns 3 verteilt sein, oder auch nur über einen Teile des Umfangs. Durch die steuerbaren Einstellelemente 11 kann eine Kraftwirkung F wie durch Pfeile 19 angedeutet erzeugt werden, durch die der Abformkern 3 in dem Stammwerkzeug 1 mit reproduzierbarer Lagegenauigkeit fixiert werden kann. Die Lagegenauigkeit kann dabei kleiner als 10 µm, bevorzugt kleiner als 5 µm sein.

Ein steuerbares Einstellelement ist dabei allgemein ein Element, dessen Position, Ausdehnung und/oder ausgeübte Kraft gesteuert werden kann, beispielsweise über entsprechende Steuerleitungen. Der Begriff "gesteuert werden kann" schließt dabei die Möglichkeit einer Regelung oder sonstigen Einstellung ein. Derartige steuerbare Einstellelemente können mechanische, pneumatische und/oder hydraulische Elemente sein. Bei mechanischen Elementen können beispielsweise Keile gegeneinander verschoben werden oder Federelemente betätigt werden, um so eine Ausdehnung von Elementen zu verändern, oder Elemente können hinsichtlich ihrer Position mit entsprechenden Antrieben verfahren werden. Bei pneumatischen oder hydraulischen Elementen kann eine Kammer mit Gas (Pneumatik) oder Flüssigkeit (Hydraulik) gefüllt werden, um deren Ausdehnung zu verändern. Besonders bevorzugt werden Hydrodehnelemente, welche als Ein- und/oder Mehrweg-/Kammersysteme ausgelegt sein können, als steuerbare Einstellelemente verwendet. Bei Hydrodehnelementen wird eine Dehnbuchse durch Einwirkung von Hydrauliköl deformiert, was mit hoher Reproduzierbarkeit möglich ist. Somit kann über die steuerbaren Einstellelemente 11 eine reproduzierbare Positionierung des Abformkerns in einer Richtung wie durch die Pfeile 19 in Fig. 1 angedeutet (in horizontaler Richtung) erreicht werden. Da die steuerbaren Einstellelemente über entsprechende Steuerleitungen gesteuert werden können, ist zudem eine Justage möglich, ohne das Abformwerkzeug zerlegen zu müssen.

In Fig. 2 ist ein weiteres Ausführungsbeispiel eines Abformwerkzeugs dargestellt. Verglichen mit dem Ausführungsbeispiel der Fig. 1 wurden die Abstandsplatten 8, 9, welche zur Höhenjustage (Einstellung in vertikaler Richtung) des Abformkerns 3 dienen, durch steuerbare Einstellelemente 12 ersetzt. Wie durch Pfeile 20 angedeutet, kann durch diese steuerbaren Einstellelemente 12 eine Kraft in vertikaler Richtung auf den Abformkern 3 ausgeübt werden und somit die Höhenjustage erfolgen. Hinsichtlich der Ausgestaltung der steuerbaren Einstellelemente 12 gelten die Ausführungen für die steuerbaren Einstellelemente 11.

Die steuerbaren Einstellelemente 12 können an verschiedenen Stellen umlaufend (ganz oder teilweise) um einen Abformkern 3 herum angeordnet sein, und/oder an verschiedenen Stellen auf einer Unterseite des Abformkerns 3. Wie dargestellt sind manche der Einstellelemente 12 am Boden der Aufnahme und andere auf einer Oberseite einer Ausbuchtung der Aufnahme (zur Aufnahme eines verbreiterten Teils des Abformkerns 3) angeordnet. Durch die steuerbaren Einstellelemente 12 kann eine Höhenjustage insbesondere durch Steuerung oder Regelung erfolgen, ohne dass Platten wie die Abstandsplatten 8, 9 ausgetauscht werden müssen. Somit ist zur Höhenjustage insbesondere keine Zerlegung des Abformwerkzeugs nötig, und die Justage kann im eingebauten Zustand, beispielsweise auf Basis einer Vermessung eines hergestellten Werkstücks, erfolgen, ohne dass durch eine Zerlegung neuen Ungenauigkeiten auftreten würden.

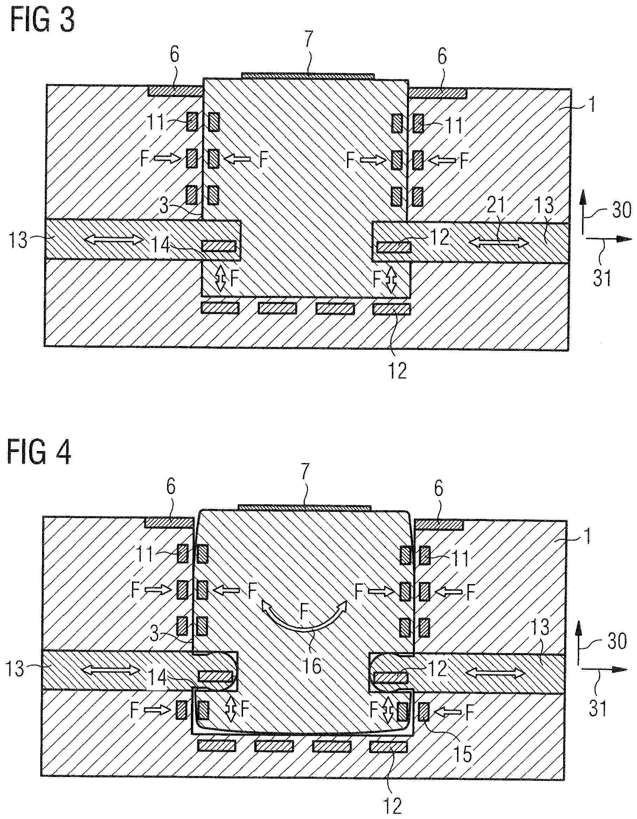

Bei den Ausführungsbeispielen der Figuren 1 und 2 muss das Abformwerkzeug nach wie vor zerlegt werden, insbesondere die Stützplatte 2 abgenommen werden, um den Abformkern auszutauschen. Bei dem Ausführungsbeispiel der Fig. 3 ist dies nicht mehr nötig. Insbesondere weist bei dem Ausführungsbeispiel der Fig. 3 das Stammwerkzeug 11 eine Aufnahme für den Abformkern 3 auf, welche frei von Hinterschneidungen ist. Des Weiteren weist das Stammwerkzeug 1 steuerbare Einstellelemente 13 auf, welche wie durch Pfeile 21 angedeutet beweglich sind, um zwischen einer ersten Position, in welcher sie mit Vertiefungen 14 in dem Abformkern 3 in Eingriff stehen, und einer zweiten Position, in der sie den Abformkern 3 freigeben, so dass dieser herausgenommen werden kann, hin und her bewegt werden können. Der Antrieb der steuerbaren Einstellelemente 13 kann dabei pneumatisch, hydraulisch oder mechanisch erfolgen. Zu beachten ist, dass die steuerbaren Einstellelemente 13 und die Vertiefungen 14 hinreichend dimensioniert werden, um die bei der Abformung auftretenden relative großen Kräfte (bis zu einigen 10 Kilonewton) tolerieren zu können. In der Querschnittsansicht der Fig. 3 sind dabei zwei steuerbare Einstellelemente 13 gezeigt. Es können auch mehrere solcher Elemente umlaufen um den Abformkern 3 angeordnet sein, und/oder die steuerbaren Einstellelemente 13 können an verschiedenen Positionen in vertikaler Richtung angeordnet sein.

Wie in Fig. 3 dargestellt kann dabei ein Teil der steuerbaren Einstellelemente 12 in den steuerbaren Einstellelementen 13 angeordnet sein.

Die Fig. 4 zeigt eine weitere Modifizierung, welche in erfindungsgemäßen Abformwerkzeugen verwendet werden kann. Bei dem Ausführungsbeispiel der Figur 4 weist der Abformkern 3 eine leicht konvexe, abgerundete Form auf, verglichen mit der eckigen Form der Figuren 1-3. In diesem Fall kann durch einzelne Ansteuerung der steuerbaren Einstellelemente 11 und 12 sowie gegebenenfalls weiterer steuerbarer Einstellelemente 15 eine Verkippung des Abformkerns wie durch einen Pfeil 16 in Fig. 4 angedeutet eingestellt werden kann. Um dies zu ermöglichen, können Enden der steuerbaren Einstellelemente 13, welche in den Vertiefungen 14 in Eingriff stehen, ebenfalls abgerundet geformt sein. Auf diese Weise können Winkeltoleranzen kleiner als 20", bevorzugt kleiner als 10" erreicht werden.

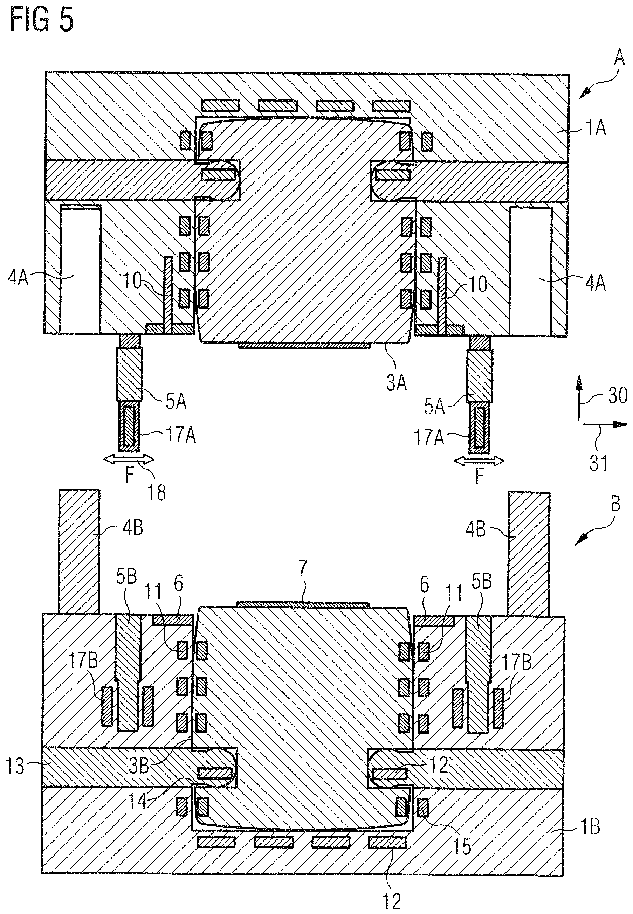

Die unter Bezugnahme auf die Figuren 1-4 dargestellten Ausführungsbeispiele weisen verbesserte Justagemöglichkeiten für Abformkerne bezüglich des Stammwerkzeugs, in welches sie eingesetzt sind, auf. Wie bereits erläutert können die verschiedenen Modifikationen unabhängig voneinander eingesetzt werden. So können Ausführungsbeispiele beliebige Kombinationen der Einstellelemente 11, 12, 13 und 15 (letztere zusammen mit einem abgerundeten Abformkern) aufweisen, wobei auch ein oder mehrere dieser Einstellelemente weggelassen sein können. Nunmehr wird unter Bezugnahme auf die Fig. 5 noch ein Ausführungsbeispiel diskutiert, bei welchem eine Justage zweier Abformwerkzeughälften zueinander verbessert ist und somit auch die Abformkerne der beiden Hälften zueinander mit erhöhter Genauigkeit justiert werden können.

Bei dem Ausführungsbeispiel der Fig. 5 bei dem Abformwerkzeug der Fig. 5 sind dabei die steuerbaren Einstellelemente, welche unter Bezugnahme auf die Fig. 1-4 diskutiert werden, sowohl in der Hälfte A als auch in der Hälfte B bereitgestellt. Bei anderen Ausführungsbeispielen können auch nur manche dieser Einstellelemente oder keine dieser Einstellelemente verwendet werden.

Wie eingangs unter Bezugnahme auf die Fig. 6 erläutert weist eine der Stammwerkzeughälften (in diesem Fall die Hälfte B) Führungssäulen 4B auf, welche mit entsprechenden Führungslöchern 4A in der Hälfte A in Eingriff gelangen. Zudem sind Präzisionsführungen 5A vorgesehen, welche in entsprechende Vertiefungen 5B in der Hälfte B eingreifen. Es können ebenso gut umgekehrt die Führungen an der Hälfte B und die Vertiefungen an der Hälfte A bereitgestellt sein.

Die Führungen 5A weisen dabei verglichen mit dem herkömmlichen Abformwerkzeug der Fig. 6 steuerbare Einstellelemente 17 auf, und/oder die Vertiefungen 5B weisen steuerbare Einstellelemente 17B auf. Die steuerbaren Einstellelemente 17A, 17B können wiederum wie bereits oben für andere steuerbare Einstellelemente erläutert ausgestaltet sein. Durch die steuerbaren Einstellelemente 17A und/oder 17B könne die Stammwerkzeughälften 1A, 1B und somit die Abformkerne 3A, 3B mit verbesserter Genauigkeit zueinander positioniert werden, da durch Kräfte, welche durch die steuerbaren Einstellelemente 17A und/oder 17B wie durch Pfeile 18 angedeutet erzeugt werden können, die Stammwerkzeughälften geringfügig in horizontaler Richtung zueinander verschoben werden können und somit eine genaue Positionierung möglich ist.

Somit kann durch den beschriebenen Absatz von steuerbaren Einstellelementen die Genauigkeit der Fertigung von Kunststoffelementen durch Abformen erhöht werden, was insbesondere zur Herstellung von optischen Element beispielsweise für Datenbrillen verwendet werden kann.

## Patentansprüche

1. Abformwerkzeug, umfassend:
ein oder mehrere steuerbare Einstellelemente (11, 12, 13, 15, 17) zum Festlegen der Lage eines Abformkerns (3) des Abformwerkzeugs, wobei das Abformwerkzeug ein Stammwerkzeug (1) mit einer Aufnahme für den Abformkern (3) umfasst, wobei das mindestens eine steuerbare Einstellelement ein oder mehrere in dem Stammwerkzeug (1) angeordnete Einstellelemente (11, 12, 13, 15, 17) umfasst,
**dadurch gekennzeichnet, dass** die ein oder mehreren in dem Stammwerkzeug (1) angeordneten Einstellelemente (11, 12, 13, 15, 17) eine oder mehrere zwischen einer ersten Position und einer zweiten Position hin und her bewegliche Einstellelemente (13) umfassen, wobei die beweglichen Einstellelemente in der ersten Position in die Aufnahme ragen, um mit Vertiefungen (14) in dem Abformkern (3) in Eingriff zu gelangen, und in der zweiten Position zurückgezogen sind, um den Abformkern (3) freizugeben, wobei die beweglichen Einstellelemente (13) umlaufend um den Abformkern (3) angeordnet sind und/oder an verschiedenen Positionen in vertikaler Richtung angeordnet sind,
wobei die ein oder mehreren in dem Stammwerkzeug (1) angeordneten Einstellelemente derart angeordnet und eingerichtet sind, eine Verkippung des Abformkerns (3) und/oder eine Höhenlage des Abformkerns (3) einzustellen.

2. Abformwerkzeug nach Anspruch 1, umfassend den Abformkern (3), wobei der Abformkern (3) eine obere Fläche, eine untere Fläche und Seitenflächen aufweist, wobei auf der oberen Fläche eine Abformfläche (7) ausgebildet ist, wobei das mindestens eine steuerbare Einstellelement (11, 12, 13, 15, 17) ein oder mehrere an der Seitenfläche des Abformkerns (3) angeordnete Einstellelemente (11) umfasst.

3. Abformwerkzeug nach Anspruch 1 oder 2, wobei die ein oder mehreren in dem Stammwerkzeug (1) angeordneten Einstellelemente (11, 12, 13, 15, 17) ein oder mehrere in einer Seitenfläche der Aufnahme angeordnete Einstellelemente umfassen.

4. Abformwerkzeug nach einem der Ansprüche 1 bis 3, wobei die ein oder mehreren in dem Stammwerkzeug (1) angeordneten Einstellelemente (11, 12, 13, 15, 17) an einem Boden der Aufnahme angeordnete Einstellelemente (12) und/oder in einer Einbuchtung der Aufnahme angeordnete Einstellelement (12) für die Höhenlageeinstellung des Abformkerns (3) umfassen.

5. Abformwerkzeug nach einem der Ansprüche 1-4, weiter umfassend den Abformkern (3), wobei der Abformkern (3) eine abgerundete Form aufweist, so dass er in der Aufnahme durch Betätigen der ein oder mehreren in dem Stammwerkzeug (1) angeordneten Einstellelemente verkippbar ist.

6. Abformwerkzeug nach einem der Ansprüche 1-5, weiter umfassend ein weiteres Stammwerkzeug, wobei zum Abformen das Stammwerkzeug und das weitere Stammwerkzeug zusammenfügbar sind, wobei das Stammwerkzeug und das weitere Stammwerkzeug jeweils eine Aufnahme für einen Abformkern aufweisen, wobei die ein oder mehreren steuerbaren Einstellelemente ein Einstellelement zur Justierung einer relativen Lage des Stammwerkzeugs zu dem weiteren Stammwerkzeug in einem zusammengefügten Zustand umfassen.

7. Abformwerkzeug nach Anspruch 6, wobei das Einstellelement (17) zur Justierung in einer Führungssäule (5A) und/oder in einer Führungsvertiefung (5B) angeordnet ist.

8. Abformwerkzeug nach einem der Ansprüche 1-7, wobei das mindestens eine steuerbare Einstellelement ein mechanisches, pneumatisches und/oder hydraulisches Einstellelement umfasst.

9. Abformwerkzeug nach Anspruch 8, wobei das mindestens eine steuerbare Einstellelement ein Hydrodehnspannelement umfasst.

10. Verwendung eines Abformwerkzeugs nach einem der Ansprüche 1-9 zur Herstellung optischer Elemente.

## Claims

1. Moulding tool comprising:
one or more controllable setting elements (11, 12, 13, 15, 17) for fixing the position of a mould core (3) of the moulding tool, wherein the moulding tool comprises a base tool (1) having a receptacle for the mould core (3), wherein the at least one controllable setting element comprises one or more setting elements (11, 12, 13, 15, 17) which are arranged in the base tool (1),
**characterized in that** the one or more setting elements (11, 12, 13, 15, 17) arranged in the base tool (1) comprise one or more setting elements (13) which are movable back and forth between a first position and a second position, wherein the movable setting elements, in the first position, project into the receptacle in order to come into engagement with depressions (14) in the moulding core (3) and, in the second position, are in a retracted state in order to release the mould core (3), wherein the movable setting elements (13) are arranged so as to run in an encircling manner around the mould core (3) and/or are arranged at various positions in the vertical direction,
wherein the one or more setting elements arranged in the base tool (1) are arranged and configured in such a way as to set a tilt of the mould core (3) and/or a height position of the mould core (3).

2. Moulding tool according to Claim 1, comprising the mould core (3), wherein the mould core (3) has an upper surface, a lower surface and side surfaces, wherein a mould surface (7) is formed on the upper surface, wherein the at least one controllable setting element (11, 12, 13, 15, 17) comprises one or more setting elements (11) which are arranged on a side surface of the mould core (3).

3. Moulding tool according to Claim 1 or 2, wherein the one or more setting elements (11, 12, 13, 15, 17) arranged in the base tool (1) comprise one or more setting elements which are arranged in a side surface of the receptacle.

4. Moulding tool according to one of Claims 1 to 3, wherein the one or more setting elements (11, 12, 13, 15, 17) arranged in the base tool (1) comprise setting elements (12) which are arranged on a bottom of the receptacle and/or setting elements (12) which are arranged in a recess of the receptacle for the height-position setting of the mould core (3).

5. Moulding tool according to one of Claims 1-4, furthermore comprising the mould core (3), wherein the mould core (3) has a rounded shape, with the result that it is tiltable in the receptacle by way of actuation of the one or more setting elements arranged in the base tool (1).

6. Moulding tool according to one of Claims 1-5, furthermore comprising a further base tool, wherein the base tool and the further base tool are able to be joined together for moulding purposes, wherein the base tool and the further base tool each have a receptacle for a mould core, wherein the one or more controllable setting elements comprise a setting element for adjusting a relative position of the base tool with respect to the further base tool in a joined-together state.

7. Moulding tool according to Claim 6, wherein the setting element (17) for adjustment is arranged in a guide column (5A) and/or in a guide depression (5B).

8. Moulding tool according to one of Claims 1-7, wherein the at least one controllable setting element comprises a mechanical, pneumatic and/or hydraulic setting element.

9. Moulding tool according to Claim 8, wherein the at least one controllable setting element comprises a hydraulic expansion clamping element.

10. Use of a moulding tool according to one of Claims 1-9 for producing optical elements.

## Revendications

1. Outil de moulage, comprenant :
un ou plusieurs éléments de réglage contrôlables (11, 12, 13, 15, 17) pour la fixation de la position d'un noyau de moulage (3) de l'outil de moulage, l'outil de moulage comprenant un outil de base (1) avec un logement pour le noyau de moulage (3), l'au moins un élément de réglage contrôlable comprenant un ou plusieurs éléments de réglage (11, 12, 13, 15, 17) agencés dans l'outil de base (1), 12, 13, 15, 17),
**caractérisé en ce que** les un ou plusieurs éléments de réglage (11, 12, 13, 15, 17) agencés dans l'outil de base (1) comprennent un ou plusieurs éléments de réglage (13) mobiles en va-et-vient entre une première position et une deuxième position, les éléments de réglage mobiles faisant saillie dans le logement dans la première position afin de venir en prise avec des cavités (14) dans le noyau de moulage (3), et étant rétractés dans la deuxième position (15) afin de libérer le noyau de moulage (3), les éléments de réglage mobiles (13) étant agencés tout autour du noyau de moulage (3) et/ou étant agencés à différentes positions dans la direction verticale,
les un ou plusieurs éléments de réglage agencés dans l'outil de base (1) étant agencés et adaptés de manière à régler un basculement du noyau de moulage (3) et/ou une position en hauteur du noyau de moulage (3).

2. Outil de moulage selon la revendication 1, comprenant le noyau de moulage (3), le noyau de moulage (3) présentant une surface supérieure, une surface inférieure et des surfaces latérales, une surface de moulage (7) étant réalisée sur la surface supérieure, l'au moins un élément de réglage contrôlable (11, 12, 13, 15, 17) comprenant un ou plusieurs éléments de réglage (11) agencés sur la surface latérale du noyau de moulage (3).

3. Outil de moulage selon la revendication 1 ou 2, les un ou plusieurs éléments de réglage (11, 12, 13, 15, 17) agencés dans l'outil de base (1) comprenant un ou plusieurs éléments de réglage agencés dans une surface latérale du logement.

4. Outil de moulage selon l'une quelconque des revendications 1 à 3, les un ou plusieurs éléments de réglage (11, 12, 13, 15, 17) agencés dans l'outil de base (1) comprenant des éléments de réglage (12) agencés sur un fond du logement et/ou des éléments de réglage (12) agencés dans un renfoncement du logement pour le réglage de la position en hauteur du noyau de moulage (3).

5. Outil de moulage selon l'une quelconque des revendications 1 à 4, comprenant en outre le noyau de moulage (3), le noyau de moulage (3) présentant une forme arrondie de telle sorte qu'il peut être basculé dans le logement par actionnement des un ou plusieurs éléments de réglage agencés dans l'outil de base (1).

6. Outil de moulage selon l'une quelconque des revendications 1 à 5, comprenant en outre un autre outil de base, l'outil de base et l'autre outil de base pouvant être assemblés pour le moulage, l'outil de base et l'autre outil de base présentant chacun un logement pour un noyau de moulage, les un ou plusieurs éléments de réglage contrôlables comprenant un élément de réglage pour l'ajustement d'une position relative de l'outil de base par rapport à l'autre outil de base dans un état assemblé.

7. Outil de moulage selon la revendication 6, l'élément de réglage (17) pour l'ajustement étant agencé dans une colonne de guidage (5A) et/ou dans une cavité de guidage (5B).

8. Outil de moulage selon l'une quelconque des revendications 1 à 7, l'au moins un élément de réglage contrôlable comprenant un élément de réglage mécanique, pneumatique et/ou hydraulique.

9. Outil de moulage selon la revendication 8, l'au moins un élément de réglage contrôlable comprenant un élément de serrage à expansion hydraulique.

10. Utilisation d'un outil de moulage selon l'une quelconque des revendications 1 à 9 pour la fabrication d'éléments optiques.
